(19) Europäisches Patentamt
European Patent Office
Office européen des brevets

(11) **EP 1 984 797 B1**

(12) **FASCICULE DE BREVET EUROPEEN**

(45) Date de publication et mention
de la délivrance du brevet:
**08.09.2010 Bulletin 2010/36**

(51) Int Cl.:
**G05D 1/00** *(2006.01)*   **G05D 1/06** *(2006.01)*
**B64D 45/04** *(2006.01)*

(21) Numéro de dépôt: **07730960.7**

(22) Date de dépôt: **13.02.2007**

(86) Numéro de dépôt international:
**PCT/FR2007/000247**

(87) Numéro de publication internationale:
**WO 2007/093698 (23.08.2007 Gazette 2007/34)**

(54) **PROCEDE ET SYSTEME POUR PREDIRE LA POSSIBILITE D ARRET COMPLET D UN AERONEF SUR UNE PISTE D ATTERISSAGE**

VERFAHREN UND SYSTEM ZUR VORHERSAGE DER MÖGLICHKEIT EINES KOMPLETTSTOPPS EINES FLUGZEUGES AUF EINER LANDEBAHN

METHOD AND SYSTEM FOR PREDICTING THE POSSIBILITY OF COMPLETE STOPPAGE OF AN AIRCRAFT ON A LANDING RUNWAY

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **17.02.2006   FR 0601395**

(43) Date de publication de la demande:
**29.10.2008   Bulletin 2008/44**

(73) Titulaire: **AIRBUS OPERATIONS (SAS)**
**31060 Toulouse (FR)**

(72) Inventeur: **CAULE, Nicolas**
**F-31100 Toulouse (FR)**

(74) Mandataire: **Bonnetat, Christian**
**Bloch & Bonnétat**
**23bis, rue de Turin**
**75008 Paris (FR)**

(56) Documents cités:
**WO-A-01/57827**      **US-A- 5 142 478**
**US-A1- 2004 167 685**

## Description

La présente invention concerne un procédé et un système pour prédire la possibilité pour un aéronef de s'arrêter complètement sur une piste d'atterrissage.

On sait que, à l'atterrissage, un aéronef peut sortir longitudinalement de la piste d'atterrissage, en bout de celle-ci, du fait, par exemple, que ledit aéronef, à la fin de sa trajectoire d'approche, a touché la piste trop loin du seuil proximal de piste (on parle alors d'"atterrissage long"). Un tel accident peut être aggravé par une vitesse d'atterrissage excessive.

Dans la technique antérieure, on connaît un système, appelé "Runway Awareness and Advisory System", fournissant au pilote d'un aéronef en phase finale d'atterrissage, c'est-à-dire roulant sur la piste en étant freiné, une information parlée concernant la longueur de piste restant à parcourir avant le seuil distal de ladite piste. Une telle information est très utile, mais elle est tardive et ne peut fournir une alerte sur un atterrissage trop long.

Par ailleurs, par exemple par les documents US 2004/0167685, US-5 142 478 et WO 01/57827, on connaît des systèmes d'aide à l'atterrissage pour des aéronefs suivant une trajectoire d'approche. De tels systèmes permettent donc de fournir des alertes en temps voulu pour prendre des dispositions appropriées à une correction d'approche ou à une remise des gaz. Cependant, le premier de ces documents exige la mise en place de moyens de transmission dédiés à terre, alors que le second est complexe, prenant en compte une pluralité de paramètres, dont un taux de décélération estimé.

La présente invention a pour objet de remédier à ces inconvénients grâce à un procédé et à un système simples, susceptibles de permettre d'éviter les accidents de sortie longitudinale en bout de piste d'atterrissage et donc d'améliorer la sécurité des vols.

A cette fin, selon l'invention, le procédé pour prédire la possibilité pour un aéronef de s'arrêter complètement, lors de son atterrissage, sur une piste d'atterrissage, alors que ledit aéronef est encore en vol à une altitude mesurée et descend vers ladite piste d'atterrissage en suivant une trajectoire d'approche inclinée formant un angle d'approche avec ladite piste d'atterrissage, ladite piste d'atterrissage comportant deux seuils d'extrémité, procédé selon lequel on calcule une position d'aboutissement estimée dudit aéronef sur ladite piste d'atterrissage et on exploite ladite position d'aboutissement estimée pour déterminer ladite possibilité est remarquable en ce que :

a) on calcule la distance horizontale séparant ledit aéronef du seuil d'extrémité proximal de ladite piste d'atterrissage ;

b) on définit ladite position d'aboutissement par sa distance an seuil d'extrémité proximal et on calcule ladite position d'aboutissement à partir de l'altitude et de la distance horizontale déterminées sous a), ainsi qu'à partir dudit angle d'approche.

Ainsi, grâce à la présente invention, on peut obtenir de façon simple, dès avant le contact de l'aéronef avec la piste d'atterrissage, une information sur le fait que l'atterrissage sera long ou non, ce qui donne le temps de prendre des mesures pour remédier aux inconvénients d'un tel atterrissage long.

Afin que la précision sur la position d'aboutissement estimée soit aussi bonne que possible, on effectue lesdites étapes a) et b) de façon répétitive pendant au moins une partie de la descente de l'aéronef sur ladite trajectoire d'approche.

L'angle d'approche utilisé dans l'étape b) peut être fourni par une base de données concernant la piste d'atterrissage. En variante, cet angle d'approche peut être calculé à bord de l'aéronef, à partir des informations inertielles délivrées par la centrale inertielle de bord.

De préférence, l'altitude utilisée dans l'étape d) est fournie par un radioaltimètre. Quant à elle, la distance horizontale, séparant ledit aéronef du seuil d'extrémité proximal de ladite piste d'atterrissage, peut être obtenue à partir d'informations de positionnement dudit aéronef délivrées par un système satellitaire de positionnement et d'informations délivrées par une base de données contenant au moins le positionnement du seuil proximal de ladite piste d'atterrissage.

Dans une forme de mise en oeuvre particulièrement simple du procédé conforme à la présente invention, ladite position d'aboutissement estimée est définie par sa distance X audit seuil d'extrémité proximal et cette distance X est choisie égale à $X = (H/tg\alpha)-D$, expression dans laquelle H est l'altitude de l'aéronef sur la trajectoire d'approche, $tg\alpha$ est la tangente de l'angle d'approche $\alpha$ et D est la distance horizontale séparant l'aéronef dudit seuil d'extrémité proximal.

On remarquera qu'une telle définition de la position d'aboutissement estimée, qui permet des calculs simples, n'est toutefois pas exacte, car elle néglige l'arrondi d'atterrissage entre la fin de la trajectoire d'approche et la piste d'atterrissage. Cependant, le manque de précision qui en résulte est sans conséquence, car il peut en être tenu compte dans l'étape c) du procédé.

On remarquera de plus que, à une fin différente de celle de la présente invention -à savoir la détermination de la position d'un aéronef par rapport à une piste d'atterrissage et non pas la prédiction d'un arrêt sur cette dernière- le document US-4 316 252 utilise également une position d'aboutissement estimée, déterminée à partir de l'altitude de l'aéronef et de l'angle d'approche. Cependant, dans le système du document US-4 316 252, la distance entre la position d'aboutissement estimée et ledit seuil proximal de la piste d'atterrissage est supposée connue (alors que, dans la présente invention, cette distance est l'inconnue à déterminer) et la distance horizontale entre l'aéronef et ledit seuil proximal est l'inconnue à déterminer (alors que, dans la présente invention, cette dernière distance est précalculée par ailleurs à partir d'informations de positionnement concernant l'aéronef et ledit seuil proximal).

Pour la mise en oeuvre de l'étape c), on peut, par exemple :

- comparer ladite distance entre ladite position d'aboutissement estimée et ledit seuil proximal de la piste d'atterrissage à une valeur limite de référence, en deçà de laquelle ledit aéronef doit pouvoir s'arrêter complètement sur ladite piste d'atterrissage et au-delà de laquelle ledit aéronef ne peut s'arrêter sur cette dernière ; ou bien
- additionner une distance d'atterrissage estimée à ladite distance entre ladite position d'aboutissement estimée et ledit seuil d'extrémité proximal, puis comparer la somme de distances ainsi obtenue à la longueur de la piste d'atterrissage.

Dans le premier cas, ladite valeur limite de référence peut être déterminée par l'expérience ou par le calcul : elle dépend bien entendu du type de l'aéronef, de ses performances de freinage, de l'état de la piste, des conditions météorologiques, etc ... Dans le second cas, ladite distance d'atterrissage estimée peut être une valeur fixe de précaution, ou bien être calculée en temps réel à partir d'une base de données de performances à l'atterrissage, ou bien encore issue d'un modèle dynamique de calcul de la distance d'arrêt. Dans les deux cas, à ladite valeur limite de référence et à ladite distance d'atterrissage estimée, on peut incorporer des marges de sécurité, entre autres pour tenir compte de l'arrondi d'atterrissage, comme mentionné ci-dessus.

Si ladite distance entre la position d'aboutissement estimée et ledit seuil d'extrémité proximal est supérieure à ladite valeur limite de référence, ou bien si ladite somme de distances est supérieure à la longueur de la piste d'atterrissage, on peut :

- émettre une ou plusieurs alarmes (sonore, lumineuse, etc ...) à l'attention de l'équipage, qui peut alors procéder à une remise des gaz et à un redécollage ; et/ou
- commander une remise des gaz et un redécollage automatiques de l'aéronef par l'intermédiaire du pilote automatique de l'aéronef.

On peut de plus prévoir d'afficher sur un écran, notamment celui appelé "Navigation Display" dans la technique aéronautique, un schéma représentatif de l'atterrissage en cours illustrant la piste, les seuils de pistes, la trajectoire d'approche, la position estimée d'aboutissement, ladite valeur limite de référence et/ou la distance d'atterrissage estimée, etc ... et, à titre d'alarme, faire clignoter et/ou représenter en couleurs vives certains de ces éléments, notamment en cas d'impossibilité d'arrêt complet de l'aéronef avant le seuil d'extrémité distal de ladite piste d'atterrissage.

Afin d'éviter de perturber l'équipage de l'aéronef par une ou plusieurs alarmes intempestives lorsque l'aéronef n'est plus en état de redécoller en toute sécurité, on peut prévoir d'inhiber dans ce cas lesdites alarmes et la commande du pilote automatique. Une telle inhibition peut être prévue lorsqu'au moins l'une des trois conditions suivantes est réalisée :

- la radioaltitude est inférieure à un seuil d'altitude, par exemple égal à 1,5 m ;
- la vitesse de l'aéronef par rapport à l'air est inférieure à un seuil de vitesse, par exemple égal à la vitesse de décollage ; et
- le train d'atterrissage de l'aéronef est comprimé, indiquant ainsi que celui-ci roule déjà sur la piste d'atterrissage.

Par ailleurs, préalablement à l'étape a), on peut examiner, pour les pistes d'atterrissage les plus proches de l'aéronef en vol, celles sur lesquelles celui-ci peut envisager d'effectuer un atterrissage. A cet effet, on peut vérifier l'une ou plusieurs des conditions suivantes :

- l'aéronef est en configuration d'atterrissage ;
- l'altitude de l'aéronef correspond à une valeur de préparation à l'atterrissage ;
- l'alignement de l'aéronef avec une ou plusieurs pistes ; et
- la distance horizontale de l'aéronef avec les seuils proximaux desdites pistes.

Pour la mise en oeuvre des étapes a) et b) du procédé conforme à la présente invention, on utilise avantageusement un système comportant des moyens de calcul :

- recevant :

  ■ l'altitude (H) dudit aéronef descendant vers une piste d'atterrissage en suivant une trajectoire d'approche inclinée formant un angle d'approche (α) avec ladite piste d'atterrissage ;
■ des informations de positionnement dudit aéronef ; et
■ des informations de positionnement d'au moins le seuil d'extrémité proximal de ladite piste d'atterrissage ; et

- calculant :

■ la distance horizontale (D) séparant ledit aéronef dudit seuil d'extrémité proximal ; et
■ la distance (X) définie par l'équation :

$$X = (H/tg\alpha) - D$$

dans laquelle tgα est la tangente de l'angle d'approche α.

Lesdits moyens de calcul peuvent, suivant les deux cas mentionnés ci-dessus :

- effectuer la comparaison de ladite distance X calculée avec ladite valeur limite de référence et engendrer un signal d'alerte lorsque ladite distance calculée X est supérieure à ladite valeur limite de référence ; ou bien
- effectuer la somme de ladite distance calculée X et de ladite distance d'atterrissage estimée, puis comparer ladite somme à la longueur de la piste d'atterrissage et engendrer un signal d'alerte lorsque ladite somme est supérieure à ladite longueur de la piste d'atterrissage.

Les figures du dessin annexé feront bien comprendre comment l'invention peut être réalisée. Sur ces figures, des références identiques désignent des éléments semblables.

La figure 1 est une vue de dessus schématique d'une piste d'atterrissage vers laquelle un aéronef exécute une manoeuvre d'approche.

La figure 2 est le schéma synoptique d'un système monté à bord dudit aéronef et permettant à celui-ci de mettre en oeuvre le procédé conforme à la présente invention.

La figure 3 illustre schématiquement un premier exemple de mise en oeuvre du procédé conforme à la présente invention.

La figure 4 illustre schématiquement un second exemple de mise en oeuvre dudit procédé.

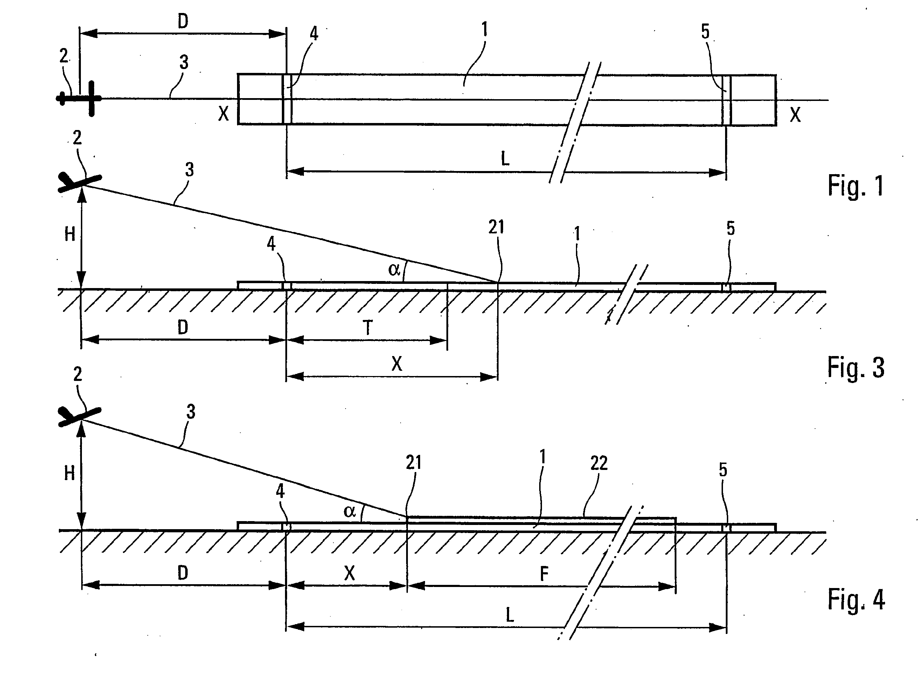

Sur la figure 1, on a représenté en vue de dessus schématique une piste d'atterrissage 1 et un aéronef 2. Celui-ci est au moins approximativement aligné avec l'axe X-X de ladite piste d'atterrissage 1 et descend vers cette dernière en suivant une trajectoire d'approche inclinée 3 (voir les figures 3 et 4). La piste d'atterrissage 1 est délimitée par deux seuils d'extrémité 4 et 5, entre lesquels est définie la longueur L de ladite piste. L'aéronef se trouve du côté du seuil d'extrémité 4, qui se trouve donc être le seuil proximal, le seuil d'extrémité 5 étant par conséquent le seuil distal.

A bord de l'aéronef 2, sont montés des moyens de calcul 6 permettant de mettre en oeuvre le procédé conforme à la présente invention.

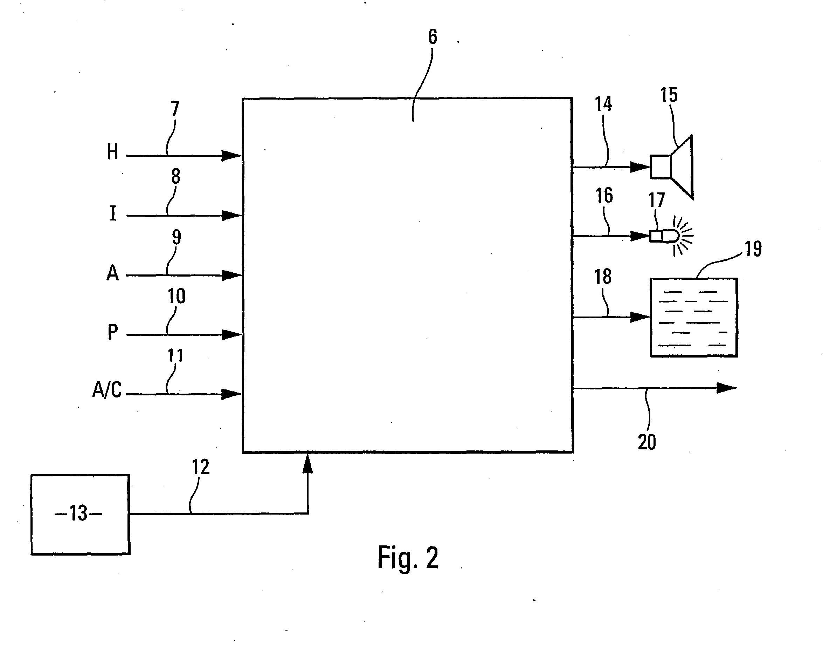

A cet effet, dans l'exemple de la figure 2, les moyens de calcul 6 comportent :

- une entrée 7 recevant la radioaltitude H mesurée par le ou les radioaltimètres de bord ;
- une entrée 8 recevant les paramètres inertiels I engendrés par la centrale inertielle de bord ;
- une entrée 9 recevant les paramètres anémométriques A engendrés par les senseurs anémométriques de bord ;
- une entrée 10 recevant la position P de l'aéronef 2 fournie par un système de positionnement par satellite ;
- une entrée 11 recevant des informations A/C propres à l'aéronef 2, telles que la configuration de sa voilure, l'état replié ou déployé des inverseurs de poussée de ses moteurs, l'état de fonctionnement de ses moteurs, ses caractéristiques de freinage et d'atterrissage, etc ... ; et
- une entrée 12, reliée à une base de données aéroportuaire 13 contenant les caractéristiques d'au moins la piste d'atterrissage 1, les coordonnées des seuils 4 et 5, la longueur L, l'état de ladite piste (eau, neige, glace, ouverture ou fermeture de la piste), etc ...

Par ailleurs, dans l'exemple de la figure 2, les moyens de calcul 6 comportent :

- une sortie 14, apte à activer un dispositif d'alarme sonore 15 ;
- une sortie 16, apte à activer un dispositif d'alarme lumineux 17 ;
- une sortie 18, apte à activer un système d'affichage électronique 19, par exemple le Navigation Display ; et
- une sortie 20, apte à commander le pilote automatique de l'aéronef 2.

L'angle d'approche α, utilisé de la façon indiquée ci-après par les moyens de calcul 6, peut être calculé par ces derniers à partir des informations inertielles I ou bien être donné par la base de données aéroportuaire 13.

De plus, grâce aux informations contenues dans cette dernière base de données et à celles P reçues sur l'entrée 10, les moyens de calcul 6 déterminent la distance horizontale D séparant l'aéronef 2 du seuil d'extrémité proximal 4.

A partir de la hauteur H, de la distance horizontale D et de l'angle d'approche α, les moyens de calcul 6 déterminent, de préférence de façon répétitive pendant la descente de l'aéronef 2 vers la piste d'atterrissage 1, une distance $X = (H/tg\alpha)-D$, définissant, par rapport au seuil d'extrémité proximal 4, une position d'aboutissement estimée 21 de la trajectoire d'approche 3 (et donc de l'aéronef 2) sur ladite piste d'atterrissage 1 (voir les figures 3 et 4).

Dans l'exemple de mise en oeuvre représenté sur la figure 3, les moyens de calcul 6 comparent ladite distance X à une valeur limite de référence T, déterminée, par expérimentation ou par calcul, de façon que, si X est inférieure à T, l'aéronef 2 doit pouvoir s'arrêter sur la piste d'atterrissage 1 avant le seuil distal 5 de cette dernière, alors que, si au contraire X est supérieure à T (cas représenté sur la figure 3), l'aéronef 2 n'a aucune chance de s'arrêter avant ledit seuil distal 5 et ne peut que sortir à l'extrémité de la piste d'atterrissage 1 s'il poursuit son atterrissage. La valeur limite de référence T est fonction du type de l'aéronef 2, des performances de freinage de celui-ci, des conditions météorologiques, de la piste d'atterrissage 1, etc ... Elle peut être établie par expérimentation ou par calcul.

Dans l'exemple de mise en oeuvre de l'invention, représenté sur la figure 4, les moyens de calcul 6 additionnent une distance d'atterrissage estimée F à ladite distance estimée X et comparent la somme X + F à la longueur L de la piste d'atterrissage 1. Cette distance d'atterrissage estimée F peut être une valeur fixe prédéterminée par calcul ou par expérience, ou bien être calculée en temps réel par les moyens de calcul 6 à partir d'une base de données de performances à l'atterrissage (non représentée). La distance d'atterrissage estimée F peut prendre en compte, outre la masse de l'aéronef 2 et sa configuration aérodynamique, l'élévation de la piste 1, l'état de celle-ci, la vitesse de l'avion par rapport à la vitesse d'approche recommandée, un éventuel vent arrière, les pannes affectant la distance d'atterrissage (inverseurs de poussée, moteurs, dispositifs d'antipatinage et d'autofreinage, ...). L'importance de ces divers paramètres est généralement publiée dans le manuel de bord FCOM (Flight Crew Operating Manual).

Si la somme X + F est inférieure à la longueur L (cas représenté sur la figure 4), l'aéronef 2 doit pouvoir s'arrêter sur la piste d'atterrissage 1 avant le seuil distal 5. En revanche, si la somme X + F est supérieure à la longueur L, l'aéronef 2 doit s'attendre à une sortie de piste longitudinale, au bout de celle-ci.

Si, selon le cas, X est supérieure à T ou X + F est supérieure à L, les moyens de calcul 6 engendrent un signal d'alerte sur ces sorties, de sorte que les alarmes sonore 1 5 et lumineuse 17 sont activées pour attirer l'attention du pilote de l'aéronef 2 sur la gravité de la situation. De plus, sur l'écran 19, peut s'afficher un schéma analogue au schéma dé la figure 3 ou à celui de la figure 4, selon le cas, avec des éléments clignotants et/ou représentés en couleurs vives.

Ainsi, le pilote est alerté et peut interrompre l'atterrissage en cours et remettre les gaz à temps -alors que l'avion 2 est encore sur la trajectoire d'approche- pour effectuer un redécollage.

Eventuellement, le signal d'alerte émis par les moyens de calcul 6 et apparaissant sur la sortie 20 peut commander directement le pilote automatique de l'aéronef 2 pour une remise des gaz et un redécollage automatiques de celui-ci.

On comprendra aisément que, à l'aide des informations que les moyens de calcul 6 reçoivent sur leurs entrées 7 à 12, l'aéronef 2 peut, avant d'entreprendre une manoeuvre d'atterrissage sur une piste 1 déterminée, calculer pour chacune d'une pluralité de pistes 1 proches de lui :

- la distance D ;
- l'alignement par rapport à l'axe X-X ; et
- l'altitude H.

De plus, il peut vérifier si sa configuration correspond à celle d'un atterrissage, de sorte qu'il peut déterminer celle ou celles desdites pistes sur laquelle ou lesquelles il peut envisager d'effectuer un atterrissage.

## Revendications

1. Procédé pour prédire la possibilité pour un aéronef (2) de s'arrêter complètement, lors de son atterrissage, sur une piste d'atterrissage (1), alors que ledit aéronef (2) est encore en vol à une altitude mesurée H et descend vers ladite piste d'atterrissage (1) en suivant une trajectoire d'approche inclinée (3) formant un angle d'approche α avec ladite piste d'atterrissage (1), ladite piste d'atterrissage comportant deux seuils d'extrémité (4, 5), procédé selon lequel on détermine une position d'aboutissement estimée (21) dudit aéronef sur ladite piste d'atterrissage (1) et on exploite ladite position d'aboutissement estimée (21) pour déterminer ladite possibilité,
**caractérisé en ce que :**

a) on calcule la distance horizontale D séparant ledit aéronef (2) du seuil d'extrémité proximal (4) de ladite piste d'atterrissage (1) ; et

b) on définit ladite position d'aboutissement (21) par sa distance X au seuil d'extrémité proximal (4) et on calcule ladite position d'aboutissement (21) à partir de l'altitude H et de la distance horizontale D déterminées sous a), ainsi qu'à partir dudit angle d'approche α.

**2.** Procédé selon la revendication 1,
**caractérisé en ce que** lesdites étapes a) et b) sont effectuées de façon répétitive pendant au moins une partie de la descente de l'aéronef (2) sur ladite trajectoire d'approche (3).

**3.** Procédé selon l'une des revendications 1 ou 2,
**caractérisé en ce que** ledit angle d'approche α est calculé à bord de l'aéronef (2).

**4.** Procédé selon l'une des revendications 1 ou 2,
**caractérisé en ce que** ledit angle d'approche α est fourni par une base de données (13) contenant des informations concernant ladite piste d'atterrissage (1).

**5.** Procédé selon l'une des revendications 1 à 4,
**caractérisé en ce que** ladite distance horizontale D, séparant ledit aéronef (2) du seuil d'extrémité proximal (4) de la piste d'atterrissage (1), est obtenue à partir d'informations de positionnement dudit aéronef (2) délivrées par un système satellitaire de positionnement et à partir d'informations délivrées par une base de données (13) contenant au moins le positionnement dudit seuil proximal de la piste d'atterrissage (1).

**6.** Procédé selon l'une des revendications 1 à 5,
**caractérisé en ce que** ladite distance X entre ladite position d'aboutissement estimée (21) et ledit seuil d'extrémité proximal (4) est choisie égale à X = (H/tgα)-D, expression dans laquelle H est l'altitude de l'aéronef (2), tgα est la tangente de l'angle d'approche α et D est la distance horizontale séparant l'aéronef (2) du seuil d'extrémité proximal (4).

**7.** Procédé selon la revendication 6,
**caractérisé en ce que,** pour déterminer ladite possibilité à partir de ladite position d'aboutissement estimée (21), on compare ladite distance X entre ladite position d'aboutissement estimée (21) et ledit seuil d'extrémité proximal (4) à une valeur limite de référence T, en deçà de laquelle ledit aéronef (2) doit pouvoir s'arrêter complètement sur ladite piste d'atterrissage (1) et au-delà de laquelle ledit aéronef (2) ne peut s'arrêter sur cette dernière.

**8.** Procédé selon la revendication 6,
**caractérisé en ce que,** pour déterminer ladite possibilité à partir de ladite position d'aboutissement estimée (21), on additionne une distance d'atterrissage estimée F à ladite distance X entre ladite position d'aboutissement estimée (21) et ledit seuil d'extrémité proximal (4), et on compare la somme de distances X + F ainsi obtenue à la longueur L de la piste d'atterrissage (1).

**9.** Procédé selon l'une des revendications 7 ou 8,
**caractérisé en ce que,** si ladite comparaison montre que l'arrêt complet de l'aéronef (2) sur la piste d'atterrissage (1) est impossible, on émet une alarme à l'attention de l'équipage de l'aéronef (2).

**10.** Procédé selon l'une des revendications 8 ou 9,
**caractérisé en ce que,** si ladite comparaison montre que l'arrêt complet de l'aéronef (2) sur la piste d'atterrissage (1) est impossible, on effectue une remise des gaz et un redécollage automatiques de l'aéronef (2).

**11.** Procédé selon l'une des revendications 9 ou 10,
**caractérisé en ce que** ladite alarme ou ladite remise des gaz est inhibée lorsque l'aéronef (2), en cours d'atterrissage, n'est plus en état de redécoller en toute sécurité.

**12.** Procédé selon l'une des revendications 1 à 11,
**caractérisé en ce que,** préalablement à l'étape a), on vérifie, pour les pistes d'atterrissage les plus proches de l'aéronef (2), celles sur lesquelles celui-ci peut envisager d'effectuer un atterrissage.

**13.** Système pour la mise en oeuvre du procédé selon la revendication 1, permettant de prédire la possibilité pour un aéronef (2) de s'arrêter complètement, lors de son atterrissage, sur une piste d'atterrissage (1), alors que ledit aéronef (2) est encore en vol et descend vers ladite piste d'atterrissage en suivant une trajectoire d'approche inclinée (3) formant un angle d'approche (α) avec ladite piste d'atterrissage (1), ladite piste d'atterrissage comportant deux seuils d'extrémité (4,5), comportant des moyens de calcul (6) :

- recevant :

. l'altitude H dudit aéronef (2) descendant vers ladite piste d'atterrissage (1) en suivant ladite trajectoire d'approche inclinée (3) formant l'angle d'approche α avec ladite piste d'atterrissage (1) ;
. des informations de positionnement dudit aéronef (2) ; et- calculant :

. une position d'aboutissement estimée (21) pour déterminer ladite possibilité; **caractérisé en ce que** les moyens de calcul (6) reçoivent . des informations de positionnement d'au moins le seuil d'extrémité proximal (4) de ladite piste d'atterrissage (1); et **en ce qu'**ils calculent
. la distance horizontale D séparant ledit aéronef (2) dudit seuil d'extrémité proximal (4) par l'intermédiaire du positionnement de l'aéronef et du positionnement dudit seuil d'extrémité proximal (4) ; et
. la distance X par rapport audit seuil d'extrémité proximal (4) définissant ladite position d'aboutissement estimée (21) à partir de l'altitude H, la distance horizontale D, et dudit angle d'approche α pour évaluer si l'atterrissage doit être interrompu.

**14.** Système selon la revendication 13,
**caractérisé en ce que** lesdits moyens de calcul calculent la distance X par rapport audit seuil d'extrémité proximal (4) par l'équation :

$$X = (H/tg\alpha)-D.$$

**15.** Système selon la revendication 13 ou 14, pour la mise en oeuvre du procédé selon la revendication 7,
**caractérisé en ce que** lesdits moyens de calcul (6) effectuent la comparaison de ladite distance X calculée avec ladite valeur limite de référence T et engendrent un signal d'alerte lorsque ladite distance calculée X est supérieure à ladite valeur limite de référence T.

**16.** Système selon la revendication 13 ou 14, pour la mise en oeuvre du procédé selon la revendication 8,
**caractérisé en ce que** lesdits moyens de calcul (6) effectuent la somme X + F de ladite distance calculée X et de ladite distance d'atterrissage estimée F, puis comparent ladite somme X + F à la longueur L de la piste d'atterrissage et engendrent un signal d'alerte lorsque ladite somme X + F est supérieure à ladite longueur L de la piste d'atterrissage (1).

**17.** Aéronef,
**caractérisé en ce qu'**il comporte un système selon l'une quelconque des revendications 13 à 16.

**Claims**

**1.** A method for predicting the possibility for an aircraft (2) to stop completely, during its landing, on a landing runway (1), while said aircraft (2) is still in flight at a measured altitude H and descending towards said landing runway (1) following an inclined approach trajectory (3) forming an angle of approach α with said landing runway (1), said landing runway comprising two end thresholds (4, 5), method according to which an estimated finishing position (21) of said aircraft on said landing runway (1) is determined and said estimated finishing position (21) is used for determining said possibility,
**characterized in that:**

a) the horizontal distance D separating said aircraft (2) from the proximal end threshold (4) of said landing runway (1) is calculated ; and
b) said finishing position (21) is defined by its distance X to said proximal end threshold (4) and said finishing position (21) is calculated on the basis of the altitude H and of the horizontal distance D determined in a), as well as on the basis of said angle of approach α.

**2.** The method as claimed in claim 1,
**characterized in that** said steps a) and b) are performed in a repetitive manner during at least part of the descent of the aircraft (2) on said approach trajectory (3).

**3.** The method as claimed in one of claims 1 or 2, **characterized in that** said angle of approach $\alpha$ is calculated aboard the aircraft (2).

**4.** The method as claimed in one of claims 1 or 2, **characterized in that** said angle of approach $\alpha$ is provided by a database (13) containing information relating to said landing runway (1).

**5.** The method as claimed in one of claims 1 to 4, **characterized in that** said horizontal distance D, separating said aircraft (2) from the proximal end threshold (4) of the landing runway (1), is obtained on the basis of positioning information for said aircraft (2) delivered by a satellite positioning system and on the basis of information delivered by a database (13) containing at least the positioning of said proximal threshold of the landing runway (1).

**6.** The method as claimed in one of claims 1 to 5, **characterized in that** said distance X between said estimated finishing position (21) and said proximal end threshold (4) is chosen equal to $X = (H/\tan\alpha)-D$, in which expression H is the altitude of the aircraft (2), $\tan\alpha$ is the tangent of the angle of approach $\alpha$ and D is the horizontal distance separating the aircraft (2) from the proximal end threshold (4).

**7.** The method as claimed in claim 6,
**characterized in that,** for determining said possibility from said estimated finishing position (21), said distance X between said estimated finishing position (21) and said proximal end threshold (4) is compared with a reference limit value T, short of which said aircraft (2) must be able to stop completely on said landing runway (1) and beyond which said aircraft (2) cannot stop thereon.

**8.** The method as claimed in claim 6,
**characterized in that,** for determining said possibility from said estimated finishing position (21), an estimated landing distance F is added to said distance X between said estimated finishing position (21) and said proximal end threshold (4), and the sum of distances $X + F$ thus obtained is compared with the length L of the landing runway (1).

**9.** The method as claimed in one of claims 7 or 8, **characterized in that,** if said comparison shows that the complete stop of the aircraft (2) on the landing runway (1) is impossible, an alarm for the attention of the crew of the aircraft (2) is emitted.

**10.** The method as claimed in one of claims 8 or 9, **characterized in that,** if said comparison shows that the complete stop of the aircraft (2) on the landing runway (1) is impossible, a go-around and an automatic re-takeoff of the aircraft (2) are realized.

**11.** The method as claimed in one of claims 9 or 10,
**characterized in that** said alarm or go-around are disabled when the aircraft (2), while landing, is no longer in a state to take off again in complete safety.

**12.** The method as claimed in one of claims 1 to 11,
**characterized in that,** prior to step a), a check is carried out to verify, for the landing runways closest to the aircraft (2), those on which the latter can envisage performing a landing.

**13.** The system for the implementation of the method as claimed in claim 1, for predicting the possibility for an aircraft (2) to stop completely, during its landing, on a landing runway (1), while said aircraft (2) is still in flight and descending towards said landing runway (1) following an inclined approach trajectory (3) forming an angle of approach $\alpha$ with said landing runway (1), said landing runway comprising two end thresholds (4, 5), said system comprising calculation means (6) :

    - receiving:

        • the altitude H of said aircraft (2) descending towards said landing runway (1) following said inclined approach trajectory (3) forming the angle of approach $\alpha$ with said landing runway (1);
        • positioning information for said aircraft (2); and

- calculating an estimated finishing position (21) for determining said possibility,

**characterized in that** said calculation means (6) receive positioning information of at least the proximal end threshold (4) of said landing runway (1) and calculate :

- the horizontal distance D separating said aircraft (2) from the proximal end threshold (4) on the basis of the positioning of the aircraft and of the positioning of said proximal end threshold (4) ; and
- the distance X from said proximal end threshold (4) defining the finishing position (21) estimated on the basis of the altitude H, of the horizontal distance D and of said angle of approach $\alpha$ for evaluating whether the landing has to be stopped.

**14.** The system as claimed in claim 13 **characterized in that** said calculation means (6) calculate the distance X from the proximal end threshold (4) by the formula

$$X = (H/\tan\alpha) - D$$

**15.** The system as claimed in claim 13 or 14, for the implementation of the method as claimed in claim 7, **characterized in that** said calculation means (6) perform the comparison of said calculated distance X with said reference limit value T and generate an alert signal when said calculated distance X is greater than said reference limit value T.

**16.** The system as claimed in claim 13 or 14, for the implementation of the method as claimed in claim 8, **characterized in that** said calculation means (6) perform the sum X + F of said calculated distance X and of said estimated landing distance F, then compare said sum X + F with the length (L) of the landing runway and generate an alert signal when said sum X + F is greater than said length L of the landing runway (1).

**17.** An aircraft,
**characterized in that** it comprises a system as claimed in any one of claims 13 to 16.

**Patentansprüche**

**1.** Verfahren zur Vorhersage der Möglichkeit eines Komplettstopps eines Flugzeuges (2) bei seiner Landung auf einer Landebahn (1), wenn sich das Flugzeug (2) auf einer Höhe H noch im Flug befindet und auf die Landebahn (1) sinkt, indem es einem geneigten Anflugweg (3) folgt, der einen Anflugwinkel $\alpha$ mit der Landebahn (1) bildet, wobei die Landebahn zwei Endschwellen (4, 5) umfasst, Verfahren, nach dem eine geschätzte Endposition (21) des Flugzeugs auf der Landebahn (1) festgelegt wird und die geschätzte Endposition verwendet wird, um die Möglichkeit festzulegen.
**dadurch gekennzeichnet, dass:**

a) der horizontale Abstand D berechnet wird, der das Flugzeug (2) von der proximalen Endschwelle (4) der Landebahn (1) trennt; und
b) die Endposition (21) durch ihren Abstand X zur proximalen Endschwelle (4) definiert und die Endposition (21) aus der Höhe H und dem horizontalen Abstand D, festgelegt unter a), sowie aus dem anflugwinkel $\alpha$ berechnet wird.

**2.** Verfahren nach Anspruch 1, **dadurch gekennzeichnet, dass** die Schritte a) und b) während mindestens eines Teils des Sinkens des Flugzeugs (2) auf dem Anflugweg (3) wiederholt durchgeführt werden.

**3.** Verfahren nach einem der Ansprüche 1 oder 2, **dadurch gekennzeichnet, dass** der Anflugwinkel $\alpha$ an Bord des Flugzeugs (2) berechnet wird.

**4.** Verfahren nach einem der Ansprüche 1 oder 2, **dadurch gekennzeichnet, dass** der Anflugwinkel $\alpha$ von einer Datenbank (13) geliefert wird, dielinformationen über die Landebahn (1) enthält.

**5.** Verfahren nach einem der Ansprüche 1 bis 4, **dadurch gekennzeichnet, dass** der horizontale Abstand D, der das Flugzeug (2) von der proximalen Endschwelle (4) der Landebahn (1) trennt, aus Informationen zur Positionierung des Flugzeugs (2), geliefert von einem Satellitensystem zur Positionierung, und aus Informationen, geliefert von einer Datenbank (13), die mindestens die Positionierung der proximalen Schwelle der Landebahn (1) umfasst, erhalten wird.

6.  Verfahren nach einem der Ansprüche 1 bis 5, **dadurch gekennzeichnet, dass** der Abstand X zwischen der geschätzten Endposition (21) und der proximalen Endschwelle (4) gleich X = (H/tgα)-D gewählt wird, einem Ausdruck, bei dem H die Höhe des Flugzeugs (2), tgα die Tangente des Annäherungswinkels α und D der horizontale Abstand ist, der das Flugzeug (2) von der proximalen Endschwelle (4) trennt.

7.  Verfahren nach Anspruch 6, **dadurch gekennzeichnet, dass,** um die Möglichkeit aus der geschätzten Endposition (21) festzulegen, der Abstand X zwischen der geschätzten Endposition (21) und der proximalen Endschwelle mit einem Referenzgrenzwert T verglichen wird, diesseits dessen das Flugzeug (2) komplett auf der Landebahn (1) stoppen können muss, und jenseits dessen das Flugzeug (2) nicht auf letzterer stoppen kann.

8.  Verfahren nach Anspruch 6, **dadurch gekennzeichnet, dass,** um die Möglichkeit aus der geschätzten Endposition (21) festzulegen, ein geschätzter Landeabstand F zum Abstand X zwischen der geschätzten Endposition (21) und der proximalen Endschwelle (4) hinzugefügt und die so erhaltene Summe der Abstände X + F mit der Länge L der Landebahn (1) verglichen wird.

9.  Verfahren nach einem der Ansprüche 7 oder 8, **dadurch gekennzeichnet, dass,** wenn der Vergleich zeigt, dass der Komplettstopp des Flugzeugs (2) auf der Landebahn (1) unmöglich ist, eine Alarm an die Besatzung des Flugzeugs (2) ausgegeben wird.

10. Verfahren nach einem der Ansprüche 8 oder 9, **dadurch gekennzeichnet, dass,** wenn der Vergleich zeigt, dass der Komplettstopp des Flugzeugs (2) auf der Landebahn (1) unmöglich ist, ein automatischer Durchstart und Neustart erfolgt.

11. Verfahren nach einem der Ansprüche 9 oder 10, **dadurch gekennzeichnet, dass** der Alarm oder der Durchstart verhindert werden, wenn das Flugzeug (2) im Laufe der Landung nicht mehr dazu in der Lage ist, mit völliger Sicherheit neuzustarten.

12. Verfahren nach einem der Ansprüche 1 bis 11, **dadurch gekennzeichnet, dass** vor Schritt a) überprüft wird, welche der vom Flugzeug (2) aus nächstgelegenen Landebahnen diejenigen sind, auf denen dieses in Betracht ziehen kann, eine Landung durchzuführen.

13. System zur Durchführung des Verfahrens nach Anspruch 1 zur Vorhersage der Möglichkeit eines Komplettstopps eines Flugzeuges (2) bei seiner Landung auf einer Landebahn (1) wenn sich das Flugzeug (2) noch im Flug befindet und auf die Landebahn sinkt, indem es einem geneigten Anflugweg (3) folgt, der einen Anflugwinkel α mit der Landebahn (1) bildet, wobei die Landebahn zwei Endschwellen (4, 5) umfasst, die Berechnungsmittel (6) umfassen:

    - empfangend:

        . die Höhe H des Flugzeugs (2), das auf die Landebahn (1) sinkt, indem es dem geneigten Anflugweg (3) folgt, der den Anflugwinkel α mit der landebahn (1) bildet;
        . Informationen zur Positionierung des Flugzeugs (2); und

    - berechnend:

        . eine geschätzte Endposition (21), um die Möglichkeit festzusetzen; **dadurch gekennzeichnet, dass** die Berechnungsmittel (6) Folgendes empfangen:
        . Informationen zur Positionierung mindestens der proximalen Endschwelle (4) der Landebahn (1);
        und dadurch, dass sie Folgendes berechnen:
        . den horizontalen Abstand D, der das Flugzeug (2) von der proximalen Endschwelle (4) trennt, mithilfe der Positionierung des Flugzeugs und der Positionierung der proximalen Endschschwelle (4); und

    - den Abstand X bezüglich der proximalen Endschwelle (4), definierend die geschätzte Endposition (21) aus der Höhe H, dem horizontalen Abstand D und dem Anflugwinkel α, um zu bewerten, ob die landung unterbrochen werden muss.

14. System nach Anspruch 13, **dadurch gekennzeichnet, dass** die Berechnungsmittel den Abstand X bezüglich der proximalen Endschwelle (4) durch die folgende Gleichung berechnen:

$$X = (H/TGA) - D.$$

15. System nach Anspruch 13 oder 14 zur Durchführung des Verfahrens nach Anspruch 7, **dadurch gekennzeichnet, dass** die Berechnungsmittel (6) den Vergleich des berechneten Abstands X mit dem Referenzgrenzwert T durchführen und ein Warnsignal erzeugen, wenn der berechnete Abstand X größer als der Referenzgrenzwert T ist.

16. System nach Anspruch 13 oder 14 zur Durchführung des Verfahrens nach Anspruch 8, **dadurch gekennzeichnet, dass** die Berechnungsmittel (6) die Summe X + F des berechneten Abstands X und des geschätzten Landungsabstands F bilden und dann die Summe X + F mit der Länge L der Landebahn vergleichen und ein Warnsignal erzeugen, wenn die Summe X + F größer als die Länge L der Landebahn (1) ist.

17. Flugzeug, **dadurch gekennzeichnet, dass** es ein System nach einem der Ansprüche 13 bis 16 umfasst.

Fig. 1

Fig. 3

Fig. 4

EP 1 984 797 B1

Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040167685 A
- US 5142478 A
- WO 0157827 A
- US 4316252 A